# EUROPEAN PATENT SPECIFICATION

(11) **EP 1 998 563 B1**
(45) Date of publication and mention of the grant of the patent: **17.07.2013**
(21) Application number: 08155824.9
(22) Date of filing: 07.05.2008
(51) Int. Cl.: H04N 5/64

(54) **Liquid crystal television receiver**
Flüssigkristallfernsehempfänger
Récepteur de télévision à cristaux liquides

(30) Priority: 29.05.2007 JP 2007141188
(43) Date of publication of application: 03.12.2008
(73) Proprietor: Funai Electric Co., Ltd., Daito-shi Osaka 574-0013 (JP)
(72) Inventor: Sugamura, Tomokazu, Osaka 574-0013 (JP)
(74) Representative: Beetz & Partner

(56) References cited:
- DE-A1-102004 055 639
- DE-A1-102005 035 028
- US-A1- 2005 088 577

## Description

### BACKGROUND OF THE INVENTION

### Field of the Invention

The present invention relates to a liquid crystal television receiver. In particular, the present invention relates to a cabinet structure of a liquid crystal television receiver for preventing a breakage of a television broadcasting receiver unit.

### Description of Related Art

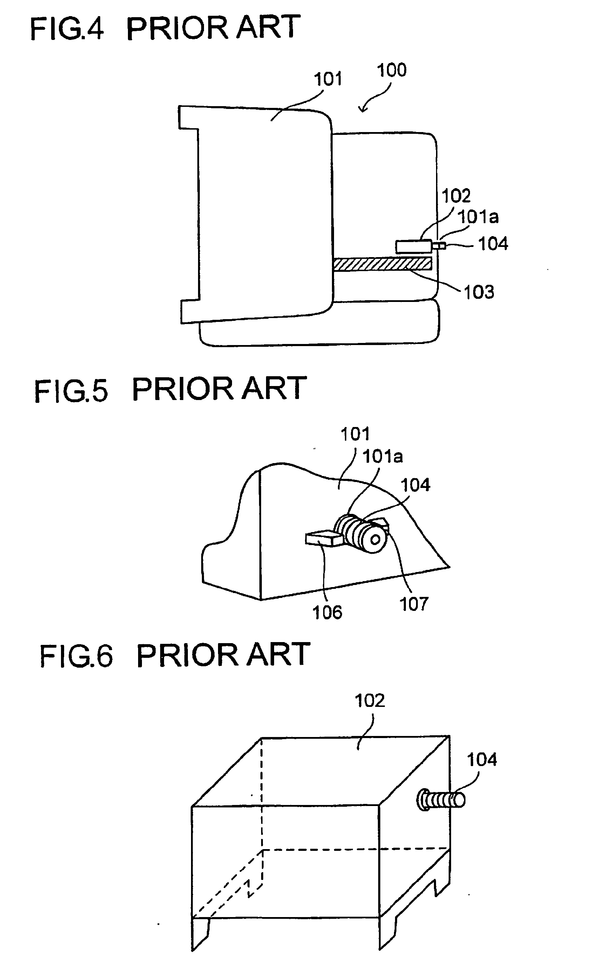

JP-A-2004-134842 discloses a conventional CRT (cathode ray tube) type television receiver in which a television broadcasting receiver unit is disposed. Fig. 4 is a vertical cross section showing a schematic structure of the conventional CRT type television receiver 100, and Fig. 5 is an enlarged perspective view of an important part of a cabinet 101 of the conventional CRT type television receiver 100 viewed from the rear side.

US2005/0088577 discloses bending an antenna input plug into a nearly L-shape allows space sufficient to accommodate user's hands to be secured when the user connects an antenna cable to the antenna input plug. In addition, mounting the antenna input plug in a rotatable manner to the shield case allows the antenna cable to be connected to the television broadcast receiver from either of the left and right directions. This provides greater freedom in installation of the television broadcast receiver and ensures user's convenience at a practical level.

As shown in Figs. 4 and 5, this television receiver 100 has a television broadcasting receiver unit 102 that is mounted on a circuit board 103, and an input terminal 104 passes through a circular hole 101 a provided to the rear side of the cabinet 101 at a lower part in the front and rear direction so as to protrude to the outside of the cabinet 101 so that an antenna cable (not shown) is connected to the input terminal 104.

Here, Fig. 6 shows an enlarged view of the television broadcasting receiver unit 102. As shown in Fig. 6, the digital broadcasting receiver unit 102 has a box shape, and the above-mentioned input terminal 104 is disposed on one side surface of the box so as to stand from the surface.

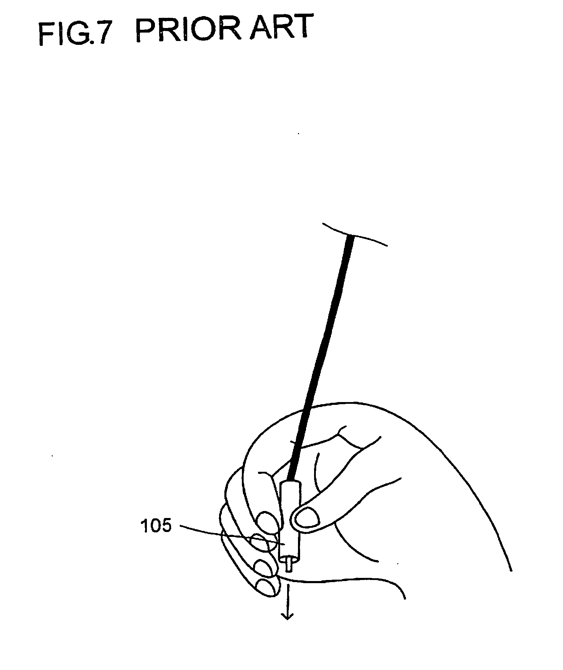

When the antenna cable is connected to the input terminal 104 of the CRT type television receiver 100, an antenna cable 105 will be held by a hand as shown in Fig. 7 and inserted into the input terminal 104 by moving the antenna cable 105 from the rear to the front of the cabinet 101 as shown by an arrow in Fig. 7. On this occasion, the hand may be unstable so that a stress may be exerted onto the input terminal 104 not only in the axial direction (the direction of the arrow in Fig. 4) but also in the direction perpendicular to the axial direction. Therefore, if only the input terminal 104 is tilted substantially with respect to the axial direction while the television broadcasting receiver unit 102 is fixed on the circuit board 103, a large mechanical stress may be exerted onto the television broadcasting receiver unit 102 by a lever mechanism with a fulcrum at the circular hole 101 a of the cabinet 101. As a result, a breakage of the television broadcasting receiver unit 102 may occur.

Therefore, a pair of triangular ribs 106 and 107 having a substantially right triangle shape are disposed to stand on the outer surface of the cabinet 101 around the circular hole 101a at the positions sandwiching the input terminal 104 side by side as shown in Fig. 5, so that the triangular ribs 106 and 107 can restrict the unstable movement of the antenna cable 105 in a substantially horizontal plane when it is connected to or disconnected from the input terminal 104. Thus, the input terminal 104 is not tilted more than a need with respect to the axial direction, so that a breakage of the television broadcasting receiver unit 102 can be prevented.

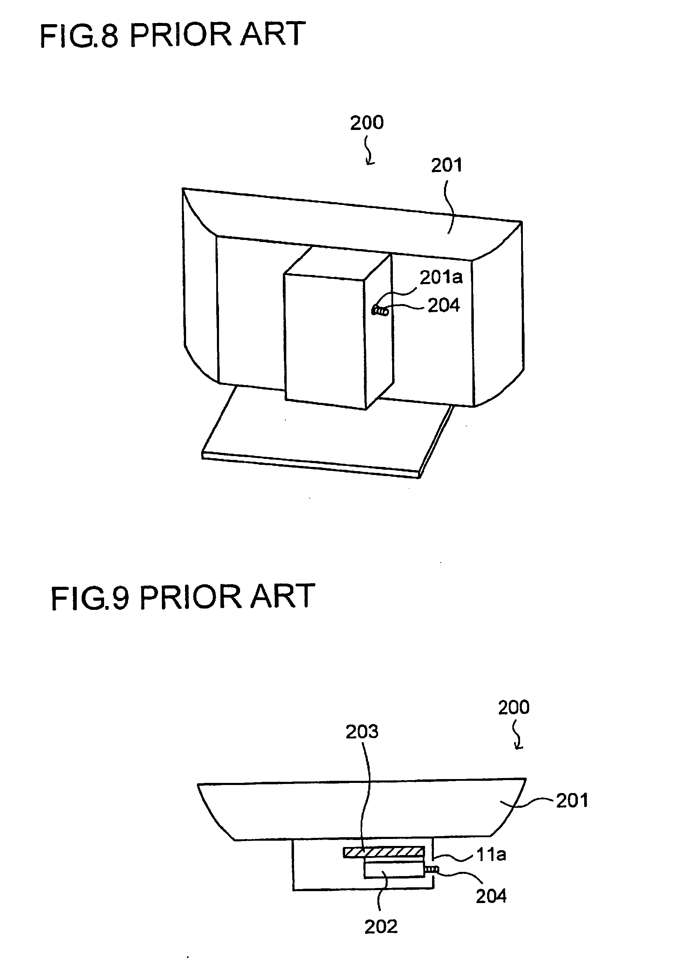

Fig. 8 is a perspective view viewed from the rear of a conventional liquid crystal television receiver 200 in which the television broadcasting receiver unit is disposed, and Fig. 9 is a horizontal cross section showing a schematic structure of the liquid crystal television receiver 200.

As shown in Figs. 8 and 9, this liquid crystal television receiver 200 has a television broadcasting receiver unit 202 mounted on a circuit board 203 disposed inside a cabinet 201. An input terminal 204 passes through a circular hole 201 a provided to the rear side of the cabinet 201 in the left and right direction so as to protrude to the outside of the cabinet 201 so that an antenna cable (not shown) is connected to the input terminal 204. Note that the television broadcasting receiver unit 202 has totally the same structure as the television broadcasting receiver unit 102 shown in Fig. 6. The structure of such a liquid crystal television receiver is described in the above-mentioned patent document.

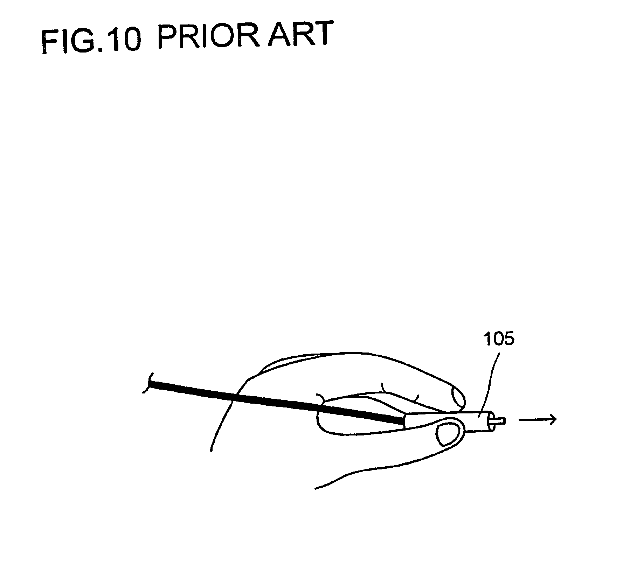

As to the above-mentioned liquid crystal television receiver 200 too, the antenna cable 105 will be held by a hand as shown in Fig. 10 and inserted into the input terminal 204 by moving the antenna cable 105 from the left to the right of the cabinet 201 as shown by an arrow in Fig. 10 when the antenna cable is connected to the input terminal 204. On this occasion, the hand may be unstable so that a stress may be exerted onto the input terminal 204 not only in the axial direction (the direction of the arrow in Fig. 9) but also in the direction perpendicular to the axial direction.
Therefore, if only the input terminal 204 is tilted substantially with respect to the axial direction while the television broadcasting receiver unit 202 is fixed on the circuit board 203, a large mechanical stress may be exerted onto the television broadcasting receiver unit 202 by a lever mechanism with a fulcrum at the circular hole 201 a of the cabinet 201. As a result, a breakage of the television broadcasting receiver unit 202 may occur.

However, since the television broadcasting receiver unit of the liquid crystal television receiver 200 is usually disposed on the upper part than the middle in the vertical direction of the cabinet 201, the unstable movement of the antenna cable 105 is apt to occur in the downward direction when it is connected or disconnected. Therefore, the countermeasure against the unstable movement in the substantially horizontal plane when the antenna cable 105 is connected to or disconnected from the above-mentioned CRT type television receiver 100 (i.e., providing a pair of triangular ribs 106 and 107) is not sufficient.

### SUMMARY OF THE INVENTION

It is an object of the present invention to restrict an unstable movement of an antenna cable when it is connected to or disconnected from an input terminal of a liquid crystal television receiver in a wide range, so that a breakage of a television broadcasting receiver unit is prevented.

A liquid crystal television receiver according to a first aspect of the present invention includes a circular hole passing through a cabinet in a left and right direction, and an input terminal of a television broadcasting receiver unit mounted on a substrate disposed vertically in the cabinet, the television broadcasting receiver unit having the input terminal passing through the circular hole so as to protrude to the outside of the cabinet. An arcuate rib is disposed on the outer surface of the cabinet around the circular hole so as to surround the input terminal like an arc from the rear part to the lower part.

As to a second aspect of the present invention, the liquid crystal television receiver of the first aspect further includes a plurality of linear ribs disposed on the outer surface of the arcuate rib so as to extend from the outer surface of the cabinet.

According to the liquid crystal television receiver of the first aspect, since the arcuate rib is disposed on the outer surface of the cabinet around the circular hole so as to surround the input terminal like an arc from the rear part to the lower part, an unstable movement of the antenna cable when it is connected to or disconnected from the input terminal can be restricted by the arcuate rib in a wide range from the rear part to the lower part of the input terminal. Therefore, the input terminal is not tilted more than a need with respect to the axial direction, so that a breakage of the television broadcasting receiver unit can be prevented effectively.

According to the liquid crystal television receiver of the second aspect, the arcuate rib is reinforced by the linear ribs so that the unstable movement of the antenna cable can be restricted more securely.

### BRIEF DESCRIPTION OF THE DRAWINGS

Fig. 1 is a perspective view of a liquid crystal television receiver viewed from the rear in which a television broadcasting receiver unit is disposed according to the present invention.
Fig. 2 is a horizontal cross section showing a schematic structure of the liquid crystal television receiver shown in Fig. 1.
Fig. 3 is an enlarged view of the encircled part shown in Fig. 1.
Fig. 4 is a cross section showing a schematic structure of a conventional CRT type television receiver in which a television broadcasting receiver unit is disposed.
Fig. 5 is an enlarged perspective view of an important part of a cabinet viewed from the rear of the CRT type television receiver shown in Fig. 4.
Fig. 6 shows an enlarged view of the television broadcasting receiver unit.
Fig. 7 is an explanatory diagram showing insertion of an antenna cable into an input terminal of the television broadcasting receiver unit of the CRT type television receiver shown in Fig. 4.
Fig. 8 is a perspective view of the conventional liquid crystal television receiver viewed from the rear in which the television broadcasting receiver unit is disposed.
Fig. 9 is a horizontal cross section showing a schematic structure of the liquid crystal television receiver shown in Fig. 8.
Fig. 10 is an explanatory diagram showing insertion of an antenna cable into an input terminal of the television broadcasting receiver unit of the liquid crystal television receiver shown in Fig. 8.

### DETAILED DESCRIPTION OF THE PREFERRED EMBODIMENTS

Hereinafter, a best embodiment of the present invention will be described with reference to the attached drawings.

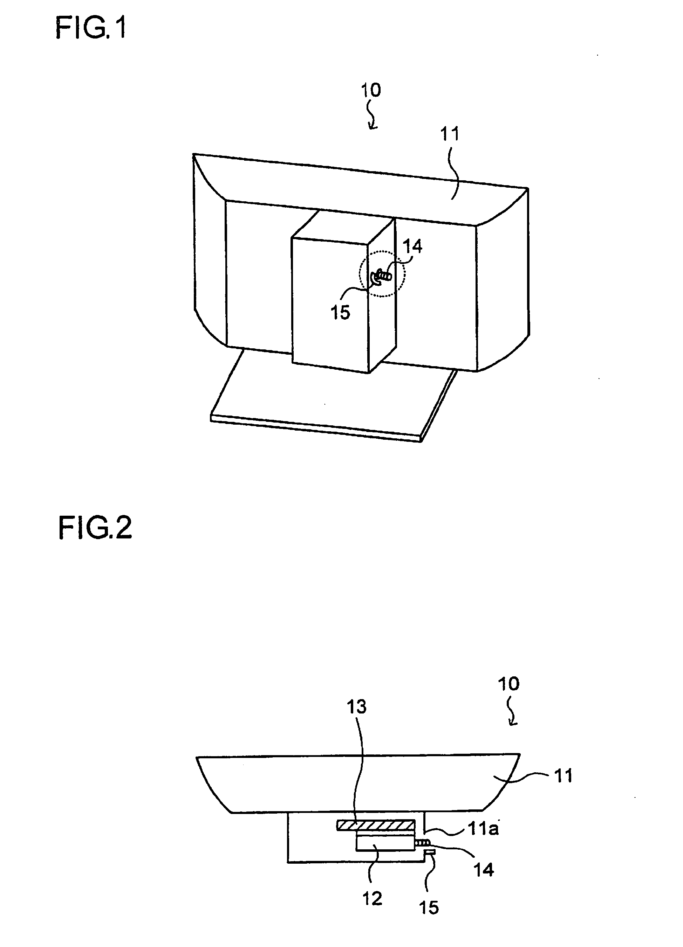

Fig. 1 is a perspective view of a liquid crystal television receiver 10 viewed from the rear in which a television broadcasting receiver unit is disposed according to the present invention, and Fig. 2 is a horizontal cross section showing a schematic structure of the liquid crystal television receiver 10.

As shown in Figs. 1 and 2, this liquid crystal television receiver 10 has a television broadcasting receiver unit 12 mounted on a circuit board 13 disposed vertically in a cabinet 11, and an input terminal 14 passes through a circular hole 11 a provided to the rear side of the cabinet 11 in the left and right direction so as to protrude to the outside of the cabinet 11 so that an antenna cable (not shown) is connected to the input terminal 14. Note that the television broadcasting receiver unit 12 has totally the same structure as the television broadcasting receiver unit 102 shown in Fig. 6.

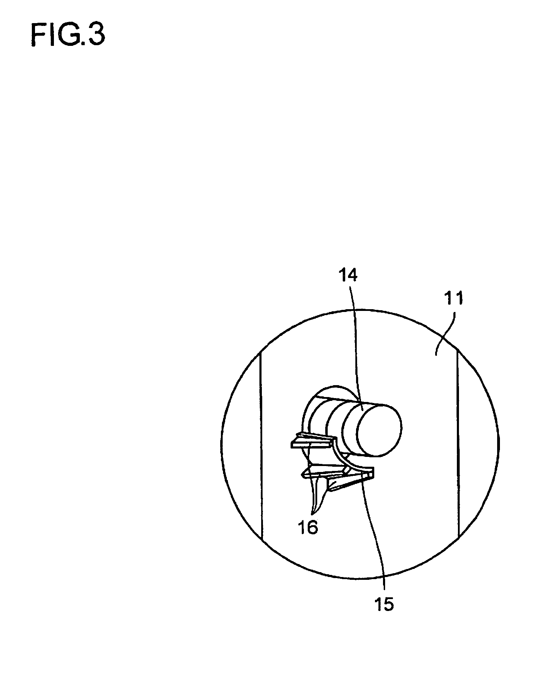

As to the liquid crystal television receiver 10 of the present invention, an arcuate rib 15 is disposed on the outer surface of the cabinet 11 around the circular hole 11 a so as to surround the input terminal 14 like an arc from the rear part to the lower part as shown in Fig. 3. Thus, an unstable movement of the antenna cable 105 when it is connected to or disconnected from the input terminal 14 can be restricted by the arcuate rib 15 in a wide range from the rear part to the lower part of the input terminal 14. Therefore, the input terminal 14 is not tilted more than a need with respect to the axial direction, so that a breakage of the television broadcasting receiver unit 12 can be prevented effectively. Note that the arcuate rib 15 may be a semicircular rib that surrounds the input terminal 14 in a semicircular manner from the rear part via the lower part to the front part.

Furthermore, it is possible to provide a plurality of linear ribs 16 extending on the outer face of the arcuate rib 15 from the outer face of the cabinet 11 as shown in Fig. 3. According to this structure, the arcuate rib 15 can be reinforced by the linear ribs 16 so that the unstable movement of the antenna cable 105 can be restricted more securely.

## Claims

1. A liquid crystal television receiver comprising:
a circular hole (11a) passing through a cabinet (11) in a left and right direction;
an input terminal (14) of a television broadcasting receiver unit (12) mounted on a substrate disposed vertically in the cabinet (11), the television broadcasting receiver unit (12) having the input terminal (14) passing through the circular hole (11a) so as to protrude to the outside of the cabinet (11),
**characterized in that**
an arcuate rib (15) is disposed on the outer surface of the cabinet (11) around the circular hole (11a) so as to surround the input terminal (14) like an arc from the rear part to the lower part.

2. The liquid crystal television receiver according to claim 1, wherein a plurality of linear ribs (16) are disposed on the outer surface of the arcuate rib (15) so as to extend from the outer surface of the cabinet (11).

## Patentansprüche

1. Flüssigkristallfernsehempfänger, umfassend:
ein kreisförmiges Loch (11a), welches ein Gehäuse (11) in einer Richtung nach Rechts und Links durchdringt;
ein Eingabeanschluss (14) einer Femsehsendungs-Empfängereinheit (12), der auf einem vertikal in dem Gehäuse (11) montierten Substrat montiert ist, wobei die Femsehsendungs-Empfängereinheit (12) einen durch das kreisförmige Loch (11a) dringenden Eingabeanschluss (14) hat, so dass dieser aus dem Gehäuse (11) heraus ragt,
**dadurch gekennzeichnet, dass**
eine bogenförmige Rippe (15) auf der Außenfläche des Gehäuses (11) um das kreisförmige Loch (11a) herum angeordnet ist, so dass sie den Eingabeanschluss (14) wie ein von dem hinteren Teil zum unteren Teil verlaufender Bogen umgibt.

2. Flüssigkristallfernsehempfänger nach Anspruch 1, wobei eine Mehrzahl von geradlinigen Rippen (16) an einer Außenfläche auf der bogenförmigen Rippe (15) angeordnet ist, so dass sie sich von der Außenfläche des Gehäuses aus erstrecken.

## Revendications

1. Récepteur de télévision à cristaux liquides comprenant :
un orifice circulaire (11a) traversant un boîtier (11) à droite et à gauche ;
une borne d'entrée (14) d'une unité réceptrice de radiodiffusion visuelle (12) montée sur un support disposé verticalement dans le boîtier (11), l'unité réceptrice de radiodiffusion visuelle (12) étant agencée de telle sorte que la borne d'entrée (14) traverse l'orifice circulaire (11a) de manière à faire saillie vers l'extérieur du boîtier (11),
**caractérisé en ce que**
une nervure courbe (15) est disposée sur la surface extérieure du boîtier (11) autour de l'orifice circulaire (11a) de manière à entourer la borne d'entrée (14) formant un arc depuis la partie arrière vers la partie inférieure.

2. Le récepteur de télévision à cristaux liquides selon la revendication 1, dans lequel une pluralité de nervures linéaires (16) lesquelles sont disposées sur la surface extérieure de la nervure courbe (15) de manière à s'étendre à partir de la surface extérieure du boîtier (11).
